# EUROPÄISCHE PATENTSCHRIFT

(11) **EP 2 815 908 B1**
(45) Veröffentlichungstag und Bekanntmachung des Hinweises auf die Patenterteilung: **21.02.2018**
(21) Anmeldenummer: 14172436.9
(22) Anmeldetag: 13.06.2014
(51) Int. Cl.: B60H 1/32, B60H 1/00

(54) **Verfahren zur thermischen Rekuperation**
Method for thermal recuperation
Procédé de récupération thermique

(30) Priorität: 17.06.2013 DE 102013211282
(43) Veröffentlichungstag der Anmeldung: 24.12.2014
(73) Patentinhaber: MAHLE Behr GmbH & Co. KG, 70469 Stuttgart (DE)
(72) Erfinder: Jung, Matthias, 70499 Stuttgart (DE); Haug, Joachim Michael, 74395 Mundelsheim (DE); Möllert, Thorsten, 70499 Stuttgart (DE); Rais, Dr. rer. nat. Thomas, 71672 Marbach/Neckar (DE); Wawzyniak, Dr. Markus, 71638 Ludwigsburg (DE)
(74) Vertreter: Grauel, Andreas

(56) Entgegenhaltungen:
- EP-A2- 2 537 693
- WO-A1-2010/079007
- DE-A1- 10 253 707
- DE-A1-102008 046 317
- US-A1- 2005 086 953

## Beschreibung

### Technisches Gebiet

Die Erfindung betrifft ein Verfahren zur thermischen Rekuperation von Energie in einem Kraftfahrzeug gemäß den Merkmalen des Anspruchs 1.

### Stand der Technik

Ein gattungsgemäßen Verfahren wird in Dokument EP 2 537 693 A2 offenbart, wobei der Kompressor je nach Fahrsituation ein- oder ausgeschaltet wird. Um den Kraftstoffverbrauch von Fahrzeugen zu senken, werden große Anstrengungen unternommen. Insbesondere um die Diskrepanz zwischen dem in einem genormten Verbrauchszyklus gemessenen Kraftstoffverbrauchswert und dem unter realen Bedingungen auftretenden Kraftstoffverbrauchswert zu verringern, werden zusätzliche Maßnahmen in Kraftfahrzeugen implementiert.

Hierbei wird beispielsweise versucht den Mehrverbrauch, welcher aus der Verwendung einer Klimaanlage resultiert zu verringern. Dies ist insbesondere notwendig, da der Kraftstoffverbrauch infolge der Klimaanlage nicht im genormten Verbrauchszyklus erfasst wird.

Hierzu sind Verfahren bekannt, bei denen kinetische Energie in elektrische Energie umgewandelt wird und in Energiespeichern für eine Verwendung gespeichert wird. Zu diesen Verfahren zählt insbesondere das Rekuperieren. Hierbei wird kinetische Energie, welche beim Bremsvorgang normalerweise größtenteils in Wärme umgewandelt wird, in elektrische Energie gewandelt und einem Energiespeicher zugeführt.

Nachteilig an dem rein elektrischen Rekuperieren der Bremsenergie ist insbesondere, dass nicht die gesamte Bremsenergie umgewandelt und gespeichert werden kann. Dies liegt in Limitierungen der elektrischen Energieaufnahme des Bordnetzes begründet. Ein wesentlicher Anteil der kinetischen Energie wird daher weiterhin in ungenutzte Wärme umgewandelt.

Darüber hinaus sind auch Verfahren bekannt, die Nebenaggregate, wie beispielsweise den Klimakompressor, in die Rekuperation einbinden. Die beim Bremsen rekuperierte Energie wird dabei verwendet um den Antrieb des Klimakompressors zu verstärken. Dadurch wird der Kältemittelmassenstrom im Kältemittelkreislauf erhöht, wodurch die Systemleistung erhöht wird. Es wird dadurch mehr Luft abgekühlt und die nicht benötigte kalte Luft gespeichert.

Besonders nachteilig an diesem Verfahren ist, dass lediglich die durch die rekuperierte Energie zusätzlich abgekühlte Luft im System gespeichert wird. Das Speichern von kalter Luft ist dabei schwierig, was die Methode nicht optimal erscheinen lässt.

### Darstellung der Erfindung, Aufgabe, Lösung, Vorteile

Es ist die Aufgabe der vorliegenden Erfindung ein Verfahren zur thermischen Rekuperation bereitzustellen, das gegenüber den Lösungen im Stand der Technik optimiert ist. Hierzu soll insbesondere die Ausnutzung der durch einen Bremsvorgang rekuperierbaren Energie verbessert werden.

Die Aufgabe des Verfahrens wird durch ein Verfahren mit den Merkmalen des Anspruchs 1 gelöst.

Ein Ausführungsbeispiel der Erfindung betrifft ein Verfahren zur thermischen Rekuperation von Energie in einem Fahrzeug, wobei ein Klimakreislauf vorgesehen ist, der zumindest die folgenden Komponenten aufweist:
- einen Kompressor, welcher an eine Antriebseinheit angebunden ist,
- einen Verdampfer, welcher von einem Kältemittel durchströmt ist und von einem Luftstrom umströmt ist,
wobei ausgehend von einer Ausgangsfahrsituation die nachfolgenden Phasen durchlaufen werden:
- Phase P1: Erhöhen der Leistungsaufnahme des Kompressors auf einen Wert P_{L1}, welcher über dem Ausgangswert P_{L0}, welcher in der Ausgangsfahrsituation anliegt, liegt,
- Phase P2: Absenken der Leistungsaufnahme des Kompressors auf einen Wert P_{L2} der unterhalb des Wertes P_{L1} jedoch oberhalb des Wertes P_{L0} liegt,
- Phase P3: Deaktivieren des Kompressors,
- Phase P4: Aktivieren des Kompressors.

Darüber hinaus ist es vorteilhaft, wenn im Klimakreislauf eine Speichereinheit vorgesehen ist, welche dem Verdampfer in Luftströmungsrichtung vorgelagert und/oder nachgelagert ist oder eine Baueinheit mit dem Verdampfer bildet, so dass sie ebenfalls von dem Luftstrom umströmt wird, wobei die Speichereinheit von einem Kältemittel durchströmt ist und die Speichereinheit ein Latentmedium aufweist, welches in thermischem Austausch mit dem Kältemittel steht.

Der Luftstrom bezieht sich auf die Luftmenge, welche den Verdampfer und/oder die Speichereinheit umströmt und schließlich zur Abkühlung und/oder Aufheizung in den Fahrgastinnenraum geleitet wird. Der Luftstrom kann dabei beispielsweise nach dem Umströmen des Verdampfers in einem Heizkörper aufgeheizt werden.

Durch eine Erhöhung der Leistungsaufnahme des Kompressors, wird die Kühlleistung des Klimakreislaufs erhöht. Dadurch kann eine stärkere Abkühlung des Luftstroms stattfinden.

Mit einer Ausgangsfahrsituation ist hier eine Fahrsituation gemeint, in welcher das Fahrzeug nicht aktiv abgebremst wird. Insbesondere ist hier das Bremspedal nicht aktiviert. Vorteilhafterweise handelt es sich dabei um eine Fahrsituation, in welcher sich das Fahrzeug mit einer gleichmäßigen Geschwindigkeit bewegt. Auch eine Fahrt mit zunehmender Geschwindigkeit ist möglich.

Ein Latentmedium bezeichnet hierbei ein Medium, welches einen Phasenübergang durch Entzug von Wärme oder Zuführung von Wärme erfahren kann. Durch einen ausreichend großen Wärmeentzug kann das Latentmedium gefroren werden. Das Latentmedium weist dann eine Phasenumwandlungsenergie auf, welche beispielsweise dazu genutzt werden kann, um einen Luftstrom abzukühlen. Diese Phasenumwandlungsenergie steht nur dann bereit, wenn eine Speichereinheit vorgesehen ist.

Durch ein Erhöhen der Leistungsaufnahme des Kompressors in Phase P1 wird die Temperatur des Luftstroms nach dem Verdampfer reduziert. In einer durchschnittlichen Anwendung stellt sich bei einer durchschnittlichen Fahrt, bei einer Außentemperatur von ca. 20° Celsius eine Lufttemperatur nach dem Verdampfer von ca. 8° Celsius ein. Durch die Erhöhung der Leistungsaufnahme wird diese Temperatur unter das reguläre Niveau von 8° Celsius abgesenkt.

Die realen Temperaturverhältnisse können von den oben genannten Werten stark abweichen. Die realen Werte sind unter anderem von der Geschwindigkeit des Fahrzeugs und der Außentemperatur abhängig. Die oben eingeführten Werte sollen lediglich ein mögliches Beispiel geben, um die grundsätzlichen Relationen zu verdeutlichen.

Um ein ungewolltes Überfrieren des Verdampfers zu vermeiden, wird regelmäßig eine minimal tolerierbare Grenztemperatur des Luftstroms nach dem Verdampfer festgelegt. Diese könnte beispielsweise bei 2° Celsius liegen. Grenztemperaturen am Gefrierpunkt oder darunter können ein Überfrieren des Verdampfers eventuell nicht vollständig vermeiden. Ein Überfrieren hat eine Reduzierung des möglichen Luftdurchsatzes durch den Verdampfer zur Folge.

Wenn in Phase P2 diese minimale Grenztemperatur erreicht ist, wird die Leistungsaufnahme des Kompressors reduziert, um ein verharren auf diesem minimalen Temperaturniveau zu gewährleisten. Die Leistungsaufnahme liegt dabei vorteilhafterweise unterhalb der Leistungsaufnahme in Phase P1, jedoch oberhalb der Leistungsaufnahme in der Ausgangsfahrsituation.

Sofern eine Speichereinheit vorgesehen ist, kann sowohl in Phase P1 als auch in Phase P2 der abgekühlte Luftstrom und das kalte Kältemittel, das ebenfalls durch die Speichereinheit strömen kann, zur Abkühlung des Latentmediums in der Speichereinheit genutzt werden. Dadurch kann eine Beladung der Speichereinheit erzeugt werden. Die Speichereinheit ist vollständig beladen, wenn das Latentmedium vollständig gefroren ist und damit die maximal mögliche thermische Kapazität in der Speichereinheit gebunden ist.

Schließlich folgt die Phase P3, in welcher die Leistungsaufnahme des Kompressors auf null reduziert wird, indem der Kompressor deaktiviert wird. Dies kann beispielsweise durch eine Abkopplung von der Antriebseinheit geschehen. Die Abkopplung kann dabei durch mechanische, hydraulische oder magnetische Mittel erreicht werden. Bei einem kupplungslosen Systemen kann der Kompressor auch durch das setzen des PWM Signals auf einen Nullwert abgekoppelt werden.

Durch die Deaktivierung des Kompressors wird der Luftstrom nicht mehr weiter durch den Kälteprozess im Klimakreislauf abgekühlt. Eine Abkühlung findet zu diesem Zeitpunkt lediglich durch die thermische Kapazität der umliegenden kalten Anbauteile, wie beispielsweise Verdampfer und Kunststoffteile, und sofern eine Speichereinheit vorgesehen ist durch einen Wärmeübergang zwischen der Speichereinheit und dem Luftstrom statt. Dies hat zur Folge, dass eine weitere Abkühlung bzw. ein Konstanthalten der Temperatur des Luftstroms nur solange erfolgen kann, bis durch die Speichereinheit und durch die umliegenden kalten Anbauteile dem Luftstrom keine Wärme mehr entzogen werden kann.

Die thermische Kapazität bzw. die zur Verfügung stehende thermische Kapazität der umliegenden Teile und die der Speichereinheit ist damit einer der maßgeblichen Faktoren, die die Zeitspanne definieren, in der auch bei deaktiviertem Kompressor eine Abkühlung des Luftstroms erfolgen kann. Die zur Verfügung stehende thermische Kapazität der Speichereinheit ist dabei im Wesentlichen abhängig von der Menge des bereits gefrorenen Latentmediums.

Wenn die zur Verfügung stehende thermische Kapazität der Speichereinheit und der umliegenden Teile erschöpft ist und ein weiteres Abkühlen bzw. ein Konstanthalten der Temperatur des Luftstroms nicht mehr gewährleistet werden kann, wird der Kompressor wieder aktiviert. Der Kälteprozess im Klimakreislauf beginnt wieder und es wird wieder eine aktive Abkühlung des Luftstroms erreicht. Das Aktivieren des Kompressors erfolgt in Phase P4.

Vorteilhafterweise wird eine obere Grenztemperatur des Luftstroms nach dem Verdampfer oder nach der Speichereinheit definiert. Solange die Temperatur unterhalb dieser oberen Grenztemperatur liegt, kann noch eine ausreichende Klimatisierung des Innenraumes gewährleistet werden. Sobald die obere Grenztemperatur jedoch überschritten ist, kann die ausreichende Klimatisierung des Innenraumes nicht mehr gewährleistet werden. Eine erneute Aktivierung des Kompressors ist dann erforderlich.

Die obere Grenztemperatur kann in Fortführung der zuvor eingeführten beispielhaften Werte bei etwa 11° Celsius liegen.

Insbesondere durch den Einsatz einer Speichereinheit, welche vorteilhafterweise durch einen sogenannten Speicherverdampfer direkt in den Verdampfer integriert ist, kann insgesamt die Phase, in welcher der Kompressor deaktiviert ist, verlängert werden.

Weiterhin ist es zu bevorzugen, wenn der Kompressor durch ein PWM-Signal (Pulsweitenmodulationssignal) ansteuerbar ist, wobei das Absenken und/oder das Erhöhen der Leistungsaufnahme des Kompressors durch eine Veränderung des PWM-Signals erreichbar ist.

Über ein PWM-Signal kann der Kompressor vorteilhaft angesteuert werden. PWM-Signale haben den Vorteil, dass sie besonders einfach zu übertragen sind.

Auch ist es vorteilhaft, wenn die Ausgangsfahrsituation eine Fahrsituation bei konstanter Geschwindigkeit oder bei zunehmender Geschwindigkeit ist.

Die Ausgangssituation stellt eine normale Fahrt dar, wobei kein Bremsvorgang vorliegt. Das Fahrzeug ist also nicht im Schubbetrieb. Dies ist vorteilhaft, da insbesondere der Übergang in den Schubbetrieb als Auslöser für den Start des Verfahrens verwendet werden kann.

Weiterhin kann es besonders vorteilhaft sein, wenn die Phase P1 durch das Einleiten eines Bremsvorganges auslösbar ist.

Das Einleiten eines Bremsvorgangs als Auslöser für die Phase P1 des Verfahrens ist besonders vorteilhaft, da während eines Bremsvorgangs in jedem Fall ein Schubbetrieb des Fahrzeugs vorliegt. Das Rekuperieren findet daher vorteilhaft während eines Bremsvorgangs statt.

Ein bevorzugtes Ausführungsbeispiel ist dadurch gekennzeichnet, dass der Übergang von Phase P1 in Phase P2 durch das Erreichen einer definierten unteren Grenztemperatur T_{GRENZ,U} des Luftstroms gebildet ist.

Eine definierte untere Grenztemperatur ist besonders vorteilhaft, um ein ungewolltes Überfrieren des Verdampfers zu vermeiden. Daher ist die untere Grenztemperatur vorteilhafterweise oberhalb des Gefrierpunktes des Mediums, welches den Verdampfer umströmt.

Auch ist es zu bevorzugen, wenn der Übergang von Phase P2 in Phase P3 durch eine Beendigung des Bremsvorgangs und einen Übergang in eine Fahrt mit konstanter Geschwindigkeit oder in eine Fahrt mit sich erhöhender Geschwindigkeit ausgelöst wird.

Durch einen Übergang in eine Fahrt mit konstanter Geschwindigkeit oder in eine Fahrt mit sich erhöhender Geschwindigkeit, wird der Schubbetrieb verlassen. Das Rekuperieren ist in dieser Situation wenig effizient, da ein Großteil der Antriebsleistung für den Antrieb des Fahrzeugs verwendet werden muss.

Auch ist es vorteilhaft, wenn der Übergang von Phase P3 in Phase P4 durch ein Überschreiten einer vorgegebenen oberen Grenztemperatur T_{GRENZ,O} des Luftstroms ausgelöst wird.

Da in Phase P3 der Kompressor deaktiviert ist, steigt die Temperatur des Luftstroms ab einem gewissen Zeitpunkt an. Um trotzdem weiterhin eine ausreichende Klimatisierung des Innenraumes zu gewährleisten, muss beim Überschreiten einer gewissen oberen Grenztemperatur der Kompressor wieder aktiviert werden, wodurch die Phase P4 beginnt.

Weiterhin ist es zu bevorzugen, wenn zwischen zwei aufeinanderfolgenden Anwendungen des Verfahrens eine definierte Mindestzeit tₘᵢₙ verstrichen sein muss.

Durch das Vorsehen eines minimalen Zeitabstandes zwischen zwei aufeinanderfolgenden Ausführungen des Verfahrens kann sichergestellt werden, dass das Verfahren nur dann ausgeführt wird, wenn tatsächlich Energie rekuperiert werden kann. Dies ist nur dann der Fall, wenn das Latentmedium durch Wärmeentzug weiter abgekühlt werden kann, wodurch die zur Abkühlung des Luftstroms zur Verfügung stehende thermische Kapazität erhöht werden kann.

In einer alternativen Ausgestaltung der Erfindung kann es vorgesehen sein, dass eine Speichereinheit verwendet wird, die ein Latentmedium vorsieht, dessen Phasenwechseltemperatur oberhalb einer definierten Temperatur T₁ liegt oder dadurch, dass die Phasenwechseltemperatur des Latentmediums unterhalb einer definierten Temperatur T₁ liegt, wobei die Temperatur T₁ einer Temperatur des Luftstroms nach dem Verdampfer entspricht.

Die sich für den Luftstrom einstellende Temperatur T₁ kann dabei beispielsweise direkt hinter dem Verdampfer gemessen werden oder unmittelbar vor der Speichereinheit. Diese Temperatur ist stark von den Umgebungsbedingungen und den Klimatisierungsanforderungen der Insassen abhängig. Für einen gegebenen Klimakreislauf stellt sich für einen durchschnittlichen Betrieb des Fahrzeugs und der Klimaanlage ein relativ konstantes Temperaturniveau für diese Temperatur T₁ ein.

Ein durchschnittlicher Betrieb ist dadurch gekennzeichnet, dass das Fahrzeug keinen extremen klimatischen Bedingungen ausgesetzt ist, keine extremen Fahranforderungen, wie beispielsweise eine Hochgeschwindigkeitsfahrt oder eine Fahrt an einem sehr steilen bergauf führenden Straßenabschnitt, abgefordert werden.

Liegt die Phasenwechseltemperatur des Latentmediums oberhalb der sich einstellenden Lufttemperatur T₁, führt dies dazu, dass das Latentmedium bereits während der normalen Fahrt einen Phasenübergang vollzieht und in der Speichereinheit gefriert. Die zur Verfügung stehende thermische Kapazität der Speichereinheit wird dadurch erhöht. Es steht somit praktisch zu jeder Zeit eine maximal aufgeladene Speichereinheit zur Verfügung. Die Zeitspanne in der der Kompressor während einer Rekuperationsphase ausgeschaltet bleiben kann wird dadurch vergrößert.

In einer zweiten Ausführungsform kann die Phasenwechseltemperatur des Latentmediums unterhalb der Lufttemperatur T₁ liegen. Hier findet der Phasenübergang nur während der Rekuperationsphase statt. Die zur Verfügung stehende thermische Kapazität der Speichereinheit wird demzufolge nur während der Rekuperation vergrößert.

Weiterhin ist es zu bevorzugen, wenn der Kompressor in Phase P1 und/oder in Phase P2 der Antriebseinheit einen höheren Widerstand entgegensetzt, wobei der höhere Widerstand durch die erhöhte Leistungsaufnahme des Kompressors verursacht ist.

Durch den höheren Widerstand durch den Kompressor während der Phase P1 und/oder der Phase P2 kann eine zusätzliche Bremswirkung erzielt werden. Der Widerstand, welcher der Antriebseinheit vom Kompressor entgegengesetzt wird, kann dabei unter anderem durch eine Verstellung der Taumelscheibe in der Kupplungseinheit verändert werden. Die Taumelscheibe muss dabei nicht notwendigerweise in der Kupplungseinheit verbaut sein, sondern kann auch im Kurbelraum des Verdichters angeordnet sein.

Auch kann es zweckmäßig sein, wenn im Klimakreislauf zusätzlich ein Bypass vorgesehen ist, wobei durch den Bypass eine Teilmenge des Luftstroms, welcher um den Verdampfer und/oder die Speichereinheit strömbar ist, an dem Verdampfer und/oder der Speichereinheit vorbeiströmbar ist.

Der Bypass ermöglicht es einen Teil des Luftstroms, welcher ohne den Bypass direkt den Verdampfer umströmen würde, am Verdampfer vorbei zu leiten. Dieser abgezweigte Teil des Luftstroms wird dabei nicht oder nur in geringem Maße von dem Verdampfer abgekühlt.

Dies ist insbesondere vorteilhaft, da es abhängig von dem Betriebszustand des Klimakreislaufes dazu kommen kann, dass der durch den Verdampfer abgekühlte Luftstrom in einer nachgelagerten Mischkammer mit einem Luftstrom höheren Temperaturniveaus vermischt wird, um eine vom Insassen vorgegebene Zieltemperatur zu erreichen. Alternativ kann der zuvor abgekühlte Luftstrom auch direkt an einem nachgelagerten Heizkörper vorbeigeleitet werden, um eine definierte Zieltemperatur zu erreichen.

Die über den Bypass an dem Verdampfer vorbeigeleitete Teilmenge kann dann in einem Mischraum mit einem Luftstrom höherer Temperatur vermischt werden oder direkt einem Heizkörper zugeleitet werden.

Eine solche Führung des Luftstromes kann energetisch wesentlich effizienter sein, da nicht zwingend zuerst eine Abkühlung des Luftstroms erfolgen muss, bevor danach eventuell wieder eine Erwärmung des Luftstromes stattfindet.

Darüber hinaus ist es zu bevorzugen, wenn die Aufteilung des Luftstroms auf einen Strömungsweg, welcher den Verdampfer umströmt, und einen Strömungsweg, welcher am Verdampfer vorbeiströmt, durch einen Verstellmechanismus realisierbar ist, wobei der Verstellmechanismus durch ein Stellsignal steuerbar ist.

Das Vorsehen eines Verstellmechanismus, welcher beispielsweise durch ein Klappenelement gebildet sein kann, ist besonders vorteilhaft, da dadurch eine gezielte Trennung des Luftstroms in einen ersten Anteil, der den Verdampfer umströmt, und in einen zweiten Anteil, der am Verdampfer vorbeiströmt, erreicht werden kann.

Vorteilhafte Weiterbildungen der vorliegenden Erfindung sind in den Unteransprüchen und der nachfolgenden Figurenbeschreibung beschrieben.

### Kurze Beschreibung der Zeichnungen

Im Folgenden wird die Erfindung anhand von Ausführungsbeispielen unter Bezugnahme auf die Zeichnungen detailliert erläutert. In den Zeichnungen zeigen:
- Fig.1: ein Blockdiagramm, welches das Ablaufschema der thermischen Rekuperation darstellt,
- Fig. 2: zwei Diagramme, wobei im oberen Diagramm aufgetragen über der Zeit die PWM-Signale eines Systems mit Speicherverdampfer und eines Systems ohne Speicherverdampfer gezeigt sind, außerdem sind im unteren Diagramm die Temperaturverläufe des Luftstroms hinter dem jeweiligen Verdampfer der beiden Systeme gezeigt, und
- Fig. 3: zwei Diagramme, wobei im oberen Diagramm das PWM-Signal eines Systems ohne Speicherverdampfer bei einem Rekuperationsvorgang dargestellt ist und im unteren Diagramm der zugehörige Temperaturverlauf des Luftstroms hinter dem Verdampfer.

### Bevorzugte Ausführung der Erfindung

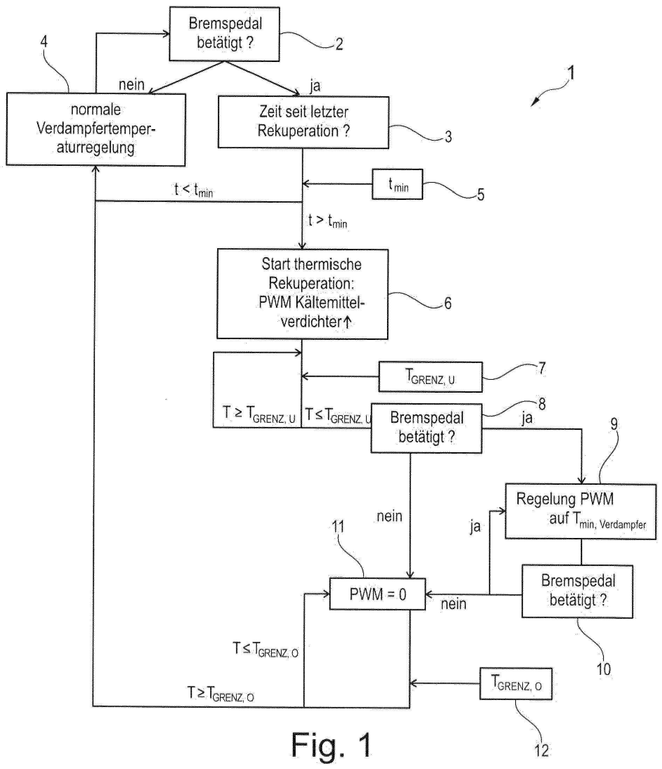

Die Fig. 1 zeigt ein Blockdiagramm 1, welches ein Ablaufschema der thermischen Rekuperation darstellt. Das Blockdiagramm 1 zeigt dabei eine Abfolge von Abfrageschritten, wobei unter anderem unterschiedliche Sollwerte mit tatsächlichen Istwerten verglichen werden.

In Block 2 des Blockdiagramms 1 wird abgefragt, ob das Bremspedal des Fahrzeugs betätigt ist. Falls das Bremspedal nicht betätigt ist, wird auf den Block 4 verwiesen, welcher vorsieht, dass eine normale Verdampfertemperaturregelung stattfindet. Es wird keine Rekuperation durchgeführt.

Ist im Block 2 das Bremspedal betätigt, wird in Block 3 abgefragt, welche Zeitspanne seit der letzten Rekuperation vergangen ist. Hierzu wird über den Block 5 eine Zeit tₘᵢₙ in das System eingegeben. Die Zeit tₘᵢₙ beschreibt dabei die Zeit, welche seit der letzten Rekuperation vergangen sein muss, bevor erneut eine Rekuperation stattfinden kann. Es findet ein Abgleich zwischen dieser Zeit tₘᵢₙ und der tatsächlichen verstrichenen Zeit statt. Wenn die tatsächlich verstrichene Zeit geringer als die in Block 5 vorgegebene minimale Zeitdauer tₘᵢₙ ist, wird zurück auf den Block 4 verwiesen. Das hat zur Folge, dass eine normale Verdampfertemperaturregelung ohne Rekuperation erfolgt.

Ist die verstrichene Zeit größer als die in Block 5 vorgegebene Minimalzeit tₘᵢₙ, wird in Block 6 die thermische Rekuperation gestartet. Hierzu wird das Pulsweitenmodulationssignal (PWM-Signal), welches den Kompressor bzw. den Kältemittelverdichter steuert, derart verändert, dass die Leistungsaufnahme des Kompressors erhöht wird. Ausgehend von der Leistungsaufnahme P_{L0} im Ausgangszustand wird die Leistungsaufnahme des Kompressors auf einen Wert P_{L1} gesteigert, welcher oberhalb des Wertes P_{L0} im Ausgangszustand liegt.

Anschließend wird über den Block 7 eine Minimaltemperatur T_{GRENZ, U} des Luftstroms hinter dem Verdampfer vorgegeben. Ist die tatsächliche Temperatur größer oder gleich der minimalen Temperatur T_{GRENZ, U}, bleibt das System im Zustand, welcher durch den Block 6 vorgegeben ist. Es wird eine Rückführschleife durchlaufen, welche direkt hinter den Block 6 geführt ist.

Ist die Temperatur kleiner oder gleich der Mindesttemperatur T_{GRENZ, U}, folgt in Block 8 eine weitere Abfrage, ob das Bremspedal weiterhin betätigt ist. Ist dies nicht der Fall, wird über den Block 11 ein PWM-Signal vorgegeben, welches gleich Null ist. Dies entspricht dem Abschalten des Kältemittelverdichters bzw. des Kompressors.

Ist das Bremspedal noch betätigt, wird über den Block 9 eine Regelung des PWM-Signals vorgegeben, welche es ermöglicht, die Temperatur des Luftstroms unmittelbar hinter dem Verdampfer auf oder nahe bei dem vorher definierten minimalen Wert T_{GRENZ, U}, zu halten, welcher aufgrund von einer Vorgabe des Systems nicht unterschritten werden darf. Dies wird durch eine Absenkung der Leistungsaufnahme des Kompressors von dem erhöhten Wert P_{L1} auf einen niedrigeren Wert P_{L2} realisiert. Dabei liegt der Wert der Leistungsaufnahme P_{L2} unterhalb des Wertes P_{L1} und oberhalb des Wertes P_{L0}.

Diese Mindesttemperatur T_{GRENZ, U}, hinter dem Verdampfer ist insbesondere dadurch bestimmt, dass ein Einfrieren des Verdampfers vermieden werden soll. Deshalb liegt diese Mindesttemperatur T_{GRENZ, U} vorteilhafterweise über dem Gefrierpunkt des den Verdampfer umströmenden Mediums. Ausgehend von Block 9 wird in Block 10 abgefragt, ob das Bremspedal weiterhin betätigt ist. Ist dies der Fall, findet eine Rückführung zum Block 9 statt.

Diese Schleife wird durchlaufen, solange das Bremspedal betätigt ist. Dabei wird das PWM-Signal jeweils so geregelt, dass der Kältemittelverdichter bzw. der Kompressor derart Leistung aufnimmt und arbeitet, dass die vorgegebene Mindesttemperatur T_{GRENZ, U} des Luftstroms hinter dem Verdampfer gehalten wird.

Führt die Abfrage in Block 10 schließlich zu dem Ergebnis, dass das Bremspedal nicht weiterhin betätigt ist, wird aus dem Zweig des Blockes 9 und 10 schließlich auch auf den Block 11 weitergeleitet, welcher vorsieht, dass das PWM-Signal den Wert Null annimmt und dadurch der Kältemittelverdichter bzw. der Kompressor abgeschaltet wird.

Nach dem Block 11 wird über dem Block 12 eine Temperatur T_{GRENZ, O} eingeführt, welche eine maximal tolerierbare Temperatur des Luftstroms hinter dem Verdampfer darstellt. Die Temperatur T_{GRENZ, O} ist derart gewählt, dass zu jeder Zeit die Klimatisierungsanforderung der Insassen erreicht werden können. Wird diese Temperatur T_{GPENZ, O} überschritten, kann es vorkommen, dass die Wunschtemperatur der Insassen nicht mehr erreicht werden kann.

Eine zusätzliche Anforderung an die Temperatur T_{GRENZ, O} kann sein, dass sie derart gewählt ist, dass es nicht zu Flüssigkeitsabscheidungen am Verdampfer oder in benachbarten Bereichen kommt. Über eine solche Flüssigkeitsabscheidung können Modergerüche entstehen, die den Insassenkomfort negativ beeinträchtigen. Die Flüssigkeitsabscheidung ist dabei insbesondere durch den Taupunkt des jeweiligen Mediums beeinflusst, welches den Verdampfer umströmt.

Führt der Abgleich der tatsächlichen Temperatur des Luftstroms hinter dem Verdampfer mit der maximal tolerierbaren Temperatur T_{GRENZ, O} aus dem Block 12 zum Ergebnis, dass die tatsächliche Temperatur geringer ist als die maximal tolerierbare Temperatur T_{GRENZ, O}, findet eine Rückführung in den Block 11 statt. Diese Schleife wird solange durchlaufen bis die Temperatur hinter dem Verdampfer schließlich die maximal tolerierbare Temperatur T_{GRENZ, O} überschreitet. Sobald diese Temperatur überschritten wird, findet eine Rückführung in den Block 4 statt, welche vorsieht, dass wieder eine normale Verdampfertemperaturregelung stattfindet. Die Rekuperationsphase ist damit beendet.

Insbesondere durch das Vorsehen eines sogenannten Speicherverdampfers, welcher ein Latentmedium aufweist, das aufgrund der Abkühlung im Klimakreislauf gefroren werden kann, kann eine thermische Kapazität geschaffen werden, welche es ermöglicht, die Phase, in welcher der Kompressor ausgeschaltet ist, zu verlängern. Auf diese Weise kann die Belastung des Antriebsaggregates verringert werden und somit der Kraftstoffverbrauch des Fahrzeugs reduziert werden. Außerdem kann die maximale tolerierbare Temperatur T_{GRENZ, O} durch den Einsatz eines Speicherverdampfers höher gewählt werden. Dadurch kann die Zeitspanne mit deaktiviertem Kompressor weiter erhöht werden.

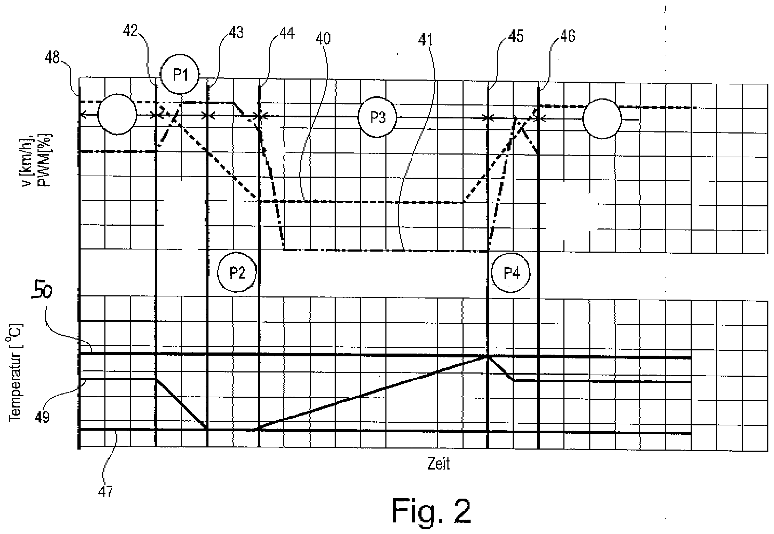

Die Fig. 2 zeigt einen qualitativen Verlauf einer thermischen Rekuperation für ein System mit einem regulären Verdampfer. Ein regulärer Verdampfer sieht dabei insbesondere keine Speichereinheit vor.

Beide Diagramme zeigen auf der x-Achse einen fortschreitenden Zeitverlauf, welcher im linken Bereich mit dem Zeitpunkt 48 beginnt, welcher den Nullwert darstellt.

Im oberen Diagramm ist der Verlauf der Geschwindigkeit 40 eines Fahrzeugs dargestellt. Weiterhin ist der Verlauf 41 dargestellt, welcher das PWM-Signal zur Ansteuerung des Kompressors zeigt.

Zwischen dem Zeitpunkt 48 und dem Zeitpunkt 42 befindet sich das Fahrzeug in einer Konstantfahrt. Dies stellt den Ausgangszustand dar. Das PWM-Signal 41 ist dabei auf einem konstanten Niveau. Im Zeitpunkt 42 wird ein Bremsvorgang eingeleitet. Zwischen dem Zeitpunkt 42 und dem Zeitpunkt 43, welcher den ersten Abschnitt des Bremsvorgangs darstellt, wird das PWM-Signal 41 von dem konstanten Ausgangsniveau auf einen erhöhten Wert angehoben. Dort verbleibt das PWM-Signal 41 bis zum Erreichen des Zeitpunkts 43. Die Zeit zwischen dem Zeitpunkt 42 und 43 bezeichnet die Phase P1.

Zwischen dem Zeitpunkt 43 und dem Zeitpunkt 44 ist der zweite Abschnitt des Bremsvorgangs dargestellt. Das PWM-Signal 41 wird abgesenkt, verbleibt jedoch auf einem Niveau oberhalb des Ausgangsniveaus. Im Zeitpunkt 44 ist der Bremsvorgang schließlich abgeschlossen. Die Zeit zwischen dem Zeitpunkt 43 und 44 wird als Phase P2 bezeichnet. Das PWM-Signal 41 wird schließlich auf ein Nullniveau abgesenkt, wodurch der Kompressor abgeschaltet wird. Zwischen dem Zeitpunkt 44 und 45 ist eine dritte Phase P3 dargestellt, welche eine Konstantfahrt des Fahrzeugs auf einem niedrigeren Geschwindigkeitsniveau darstellt. In dieser Phase P3 ist der Kompressor abgeschaltet.

Zum Ende der Phase P3 wird die Geschwindigkeit 40 des Fahrzeugs wieder erhöhtEs findet eine Beschleunigung statt. Das PWM-Signal 41 bleibt jedoch bis zum Zeitpunkt 45 auf einem Nullniveau, wodurch der Kompressor ausgeschaltet bleibt.

Zwischen dem Zeitpunkt 45 und 46, welcher dem zweiten Teil der Beschleunigung entspricht, wird das PWM-Signal 41 mit einem steilen Anstieg auf ein Niveau erhöht, welches dem Niveau entspricht, welches in Phase P1 erreicht wurde. Zwischen Zeitpunkt 45 und 46 herrscht Phase P4 vor. Von dort fällt das PWM-Signal 41 wieder auf ein Niveau ab, welches dem Ausgangsniveau entspricht. Nach dem Zeitpunkt 46 bleibt das PWM-Signal 41 weiter konstant. Ebenso bleibt die Geschwindigkeit 40 nach dem Zeitpunkt 46 konstant, auf dem Niveau des Ausgangszustands.

Im unteren Teil des Diagramms ist der Temperaturverlauf 49 gezeigt, welcher der Temperatur des Luftstroms nach dem Verdampfer entspricht. Der Temperaturverlauf 49 bewegt sich dabei in einem Bereich, welcher durch die untere Temperaturgrenze 47 (T_{GRENZ, U}) und die obere Temperaturgrenze 50 (T_{GRENZ, O}) definiert ist. Die untere Temperaturgrenze 47 entspricht dabei der minimalen Temperatur des Luftstroms hinter dem Verdampfer, welche per Definition festgelegt ist und nicht unterschritten werden soll. Die obere Grenze 50 entspricht dabei der maximal tolerierbaren Temperatur des Luftstroms hinter dem Verdampfer.

Ausgehend von dem Ausgangszustand bleibt die Temperatur 49 konstant und wird in der Phase P1 zwischen dem Zeitpunkt 42 und 43 auf das untere Temperaturniveau 47 abgesenkt. In Phase P2 zwischen dem Zeitpunkt 43 und 44 hat die Temperatur 49 schließlich die minimale Grenze 47 erreicht. In Phase P3 zwischen dem Zeitpunkt 44 und 45 steigt die Temperatur 49 aufgrund des ausgeschalteten Kompressors an bis sie die obere Temperaturgrenze 50 im Zeitpunkt 45 erreicht.

Im Zeitpunkt 45 wird schließlich der Kompressor wieder aktiviert, wodurch die Temperatur 49 wieder abgesenkt wird. In der Phase P4 zwischen dem Zeitpunkt 45 und 46 erreicht die Temperatur 49 schließlich wieder ein Niveau, welches der Ausgangstemperatur entspricht. Über den Zeitpunkt 46 hinaus verbleibt die Temperatur 49 auf diesem Niveau.

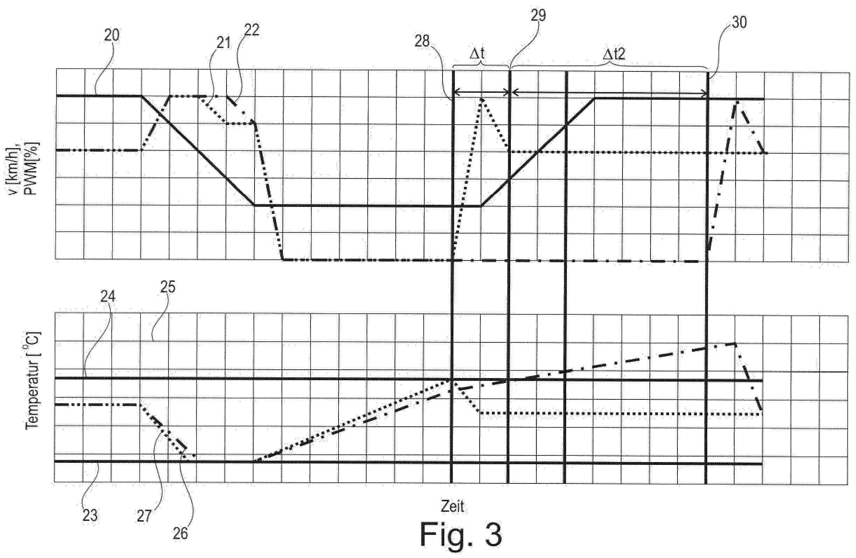

Die Fig. 3 zeigt schließlich zwei Diagramme, welche jeweils auf der x-Achse die fortlaufende Zeit aufgetragen haben, Im oberen Diagramm ist eine Verlaufskurve 20 gezeigt, welche die momentane Geschwindigkeit eines Kraftfahrzeuges darstellt. Die Kurve 20 zeigt zu Beginn im linken Bereich eine Konstantfahrt auf, welcher ein Abbremsvorgang folgt, welcher durch eine Absenkung der Kurve 20 dargestellt ist. Nach dem Bremsvorgang folgt eine weitere Konstantfahrt auf niedrigerem Geschwindigkeitsniveau. An diese Konstantfahrt schießt sich dann eine Beschleunigung an, auf welche wieder eine Konstantfahrt mit dem Geschwindigkeitsniveau des Ausgangszustands folgt.

Gleichzeitig ist im oberen Diagramm eine Kurve 21 aufgetragen, welche das PWM-Signal zur Ansteuerung eines Kompressors darstellt. Weiterhin ist ein zweites PWM-Signal 22 gezeigt, welches der Ansteuerung eines Kompressors in einem System mit Speicherverdampfer dient.

Das PWM-Signal 21 zeigt einen Verlauf eines PWM-Signals, wie es bereits in Fig. 2 gezeigt wurde. Es ist zu erkennen, dass von einem konstanten Niveau der PWM-Signale 21 und 22 beide PWM-Signale beim Beginn des Bremsvorgangs angehoben werden. Dies geschieht im gleichen Maße.

Beide PWM-Signale 21 und 22 erreichen ein erhöhtes Niveau, welches während des ersten Abschnitts des Bremsvorgangs beibehalten wird. Nach dem Verstreichen einer gewissen Zeit sinkt letztlich das PWM-Signal 21 leicht ab, während das PWM-Signal 22 weiterhin auf diesem hohen Niveau bleibt. Das PWM-Signal 22 sinkt erst nach dem Verstreichen einer weiteren Zeitspanne ab und erreicht schließlich wieder das Niveau des PWM-Signals 21. Die beiden PWM-Signale 21 bzw. 22 erreichen dann, insbesondere am Ende des Bremsvorgangs, ein gleiches Niveau. Beim Übergang in die Konstantfahrt sinken die PWM-Signale 21 und 22 stark ab und gehen in einen Bereich über, in dem sowohl das PWM-Signal 21 als auch das PWM-Signal 22 einen Nullwert annimmt. Dies entspricht dem Abschalten des angesteuerten Kompressors.

Der Kompressor kann dabei solange abgeschaltet bleiben, solange die Temperatur des Luftstroms nach dem Verdampfer nicht über eine vordefinierte Temperaturobergrenze T_{GRENZ, O} ansteigt. Zu dem Zeitpunkt 28, wird das PWM-Signal 21 angehoben auf das Niveau des Wertes, welches das PWM-Signal 21 unmittelbar nach Beginn des Bremsvorgangs hatte. Nach dem Erreichen dieser Spitze fällt das PWM-Signal 21 steil ab bis zum Zeitpunkt 29.

Die zwischen dem Zeitpunkt 28 und dem Zeitpunkt 29 verstrichene Zeit wird als Δt bezeichnet. Nach dem Zeitpunkt 29 verläuft das PWM-Signal 21 auf einem Niveau, welches dem Ausgangsniveau während der ersten Konstantfahrt entspricht. Während dieses Anstiegs des PWM-Signals 21 und der anschließenden Absenkung auf ein konstantes Niveau bleibt das PWM-Signal 22 weiterhin auf einem Nullniveau, was einem ausgeschalteten Kompressor entspricht.

Zwischen dem Zeitpunkt 29 und einem später liegenden Zeitpunkt 30 bleibt das PWM-Signal 21 weiterhin auf einem konstanten Niveau, welches es zum Zeitpunkt 29 bereits erreicht hat. Die Zeitspanne zwischen dem Zeitpunkt 29 und dem Zeitpunkt 30 wird als Δt2 bezeichnet. In dieser Zeitspanne ist das PWM-Signal 22 weiterhin auf dem Nullniveau. Erst beim Erreichen des Zeitpunkts 30 wird das PWM-Signal 22, ähnlich wie das PWM-Signal 21 zum Zeitpunkt 28 deutlich erhöht und schließlich auf ein konstantes Niveau, welches dem PWM-Signal 21 entspricht, abgesenkt.

Aus dem oberen Diagramm geht somit hervor, dass insbesondere beim Verwenden eines Speicherverdampfers der Kompressor im Vergleich zu einer Ausführung mit nur einem normalen Verdampfer um die Zeitspanne zwischen dem Zeitpunkt 28 bis 30 verlängert werden kann. Die Verlängerung der Ausschaltzeitdauer um die Zeitspannen Δt und Δt2 liegt insbesondere in der thermischen Speicherfähigkeit des Latentmediums begründet.

Insbesondere die zweite Zeitspanne Δt2, welche zur Verlängerung der Ausschaltdauer des Kompressors beiträgt, liegt darin begründet, dass durch die Verwendung eines Speicherverdampfers das Temperaturniveau des Luftstroms nach dem Verdampfer insgesamt höher liegen kann. Die maximal tolerierbare Temperatur T_{GRENZ, O}, welche bereits in der Fig. 1 eingeführt wurde, liegt somit höher als die maximal tolerierbare Temperatur T_{GRENZ, O} im Falle eines einfachen Verdampfers ohne Speichereinheit.

Im unteren Diagramm sind die Temperaturverläufe 26 und 27 dargestellt. Dabei entspricht der Temperaturverlauf 26 der Temperatur des Luftstroms hinter dem Verdampfer in einem System, welches einen Speicherverdampfer aufweist. Der Temperaturverlauf 27 entspricht dabei einem System mit einem regulären Verdampfer ohne Speichereinheit. Die Temperaturverläufe 26 und 27 stellen dabei die jeweils vorherrschenden Temperaturen des Luftstroms hinter dem Verdampfer dar bei einer Ansteuerung, wie sie im oberen Diagramm dargestellt ist.

Im unteren Diagramm ist mit der Linie 23 die minimale Temperatur T_{GRENZ, U} dargestellt, welche der Luftstrom hinter dem Verdampfer nach Möglichkeit nicht unterschreiten sollte. Diese minimale Temperatur gilt sowohl für den Temperaturverlauf 26 als auch für den Temperaturverlauf 27.

Die Linie 24 stellt die Maximaltemperatur T_{GRENZ, O} des Luftstroms hinter dem Verdampfer dar, welche noch tolerierbar ist, um die Klimatisierungsanforderungen der Insassen noch erfüllen zu können. Die maximal mögliche Temperatur T_{GRENZ, O} 24 bezieht sich dabei auf ein System mit einem regulären Verdampfer ohne Speichereinheit.

Die Linie 25, welche oberhalb der Linie 24 angeordnet ist, ist die maximal mögliche Temperatur T_{GRENZ, O SPVD} des Luftstroms nach dem Verdampfer, für ein System mit Speicherverdampfer.

Aus dem unteren Teil des Diagramms der Fig. 2 kann abgeleitet werden, dass die maximal tolerierbare Temperatur T_{GRENZ, O} des Luftstroms nach dem Verdampfer bei einem System mit einem Speicherverdampfer, deutlich oberhalb der maximal tolerierbaren Temperatur T_{GRENZ, O} 24 liegt.

Beide Temperaturen 26 bzw. 27 weisen im Ausgangszustand ein identisches Temperaturniveau auf, weiches zwischen den Grenzen 23 und 24 liegt. Beim Einleiten des Bremsvorgangs sinken beide Temperaturen 26, 27 ab. Dabei sinkt die Temperatur 26 langsamer ab als die Temperatur 27. Beide erreichen schließlich die minimale Temperatur 23. Zu dem Zeitpunkt, an dem der Bremsvorgang beendet wird und somit der Kompressor ausgeschaltet wird, steigen beide Temperaturen 26 bzw. 27 wieder an. Dabei steigt die Temperatur 26 langsamer an als die Temperatur 27. Zum Zeitpunkt 28 erreicht die Temperatur 27 schließlich die Maximaltemperatur 24.

Zu diesem Zeitpunkt ist die Temperatur 26 noch unterhalb der Grenze 24. Durch das Anschalten des Kompressors zum Zeitpunkt 28, wird die Temperatur 27 schließlich wieder auf einen Wert zwischen der unteren Grenze 23 und der oberen Grenze 24 herabreguliert. Die Temperatur 27 verbleibt schließlich auf einem konstanten Niveau, welches dem Temperaturniveau im Ausgangszustand entspricht.

Gleichzeitig steigt die Temperatur 26 weiterhin an und überschreitet im Zeitpunkt 29 die obere Temperaturgrenze 24. Aufgrund des Vorsehens eines Speicherverdampfers ist für das System mit dem Speicherverdampfer eine Maximaltemperatur auf dem Niveau der oberen Temperaturgrenze 25 möglich. Daher steigt die Temperatur weiter an, bis sie schließlich im Zeitpunkt 30 die obere Temperaturgrenze 25 erreicht. Durch das Anschalten des Kompressors im Zeitpunkt 30 wird schließlich die Temperatur 26 ebenfalls wieder auf ein Temperaturniveau zwischen den Grenzen 23 und 24 abgesenkt.

Je nach der Gestaltung des Verdampfers und insbesondere der Speichereinheit, können die Temperaturen unmittelbar hinter dem Verdampfer auch unmittelbar hinter der Speichereinheit gemessen werden. In einer bevorzugten Bauform sind der Verdampfer und die Speichereinheit als einteiliges Element ausgeführt, wodurch sich die Temperaturen unmittelbar hinter dem Verdampfer und hinter der Speichereinheit entsprechen.

Die Verläufe der Fig. 2 und 3 sind beispielhaft und stellen qualitative Verläufe dar. Aufgrund von unterschiedlichen Ausgestaltungen der einzelnen Systeme bzw. aufgrund von unterschiedlichen Umgebungsbedingungen können diese Verläufe abweichen.

Ebenso stellt das Blockdiagramm der Fig. 1 einen beispielhaften Ablauf der thermische Rekuperation dar. Durch das Vorsehen zusätzlicher technischer Hilfsmittel kann dieser Rekuperationsprozess auch in abgeänderter Form stattfinden.

## Patentansprüche

1. Verfahren zur thermischen Rekuperation von Energie in einem Fahrzeug, wobei ein Klimakreislauf vorgesehen ist, der zumindest die folgenden Komponenten aufweist:
- einen Kompressor, welcher an eine Antriebseinheit angebunden ist,
- einen Verdampfer, welcher von einem Kältemittel durchströmt ist und von einem Luftstrom umströmt ist,
**dadurch gekennzeichnet, dass** ausgehend von einer Ausgangsfahrsituation die nachfolgenden Phasen durchlaufen werden:
- Phase P1: Erhöhen der Leistungsaufnahme des Kompressors auf einen Wert (P_{L1}), welcher über dem Ausgangswert (P_{L0}), welcher in der Ausgangsfahrsituation anliegt, liegt,
- Phase P2: Absenken der Leistungsaufnahme des Kompressors auf einen Wert (P_{L2}) der unterhalb des Wertes (P_{L1}) jedoch oberhalb des Wertes (P_{L0}) liegt,
- Phase P3: Deaktivieren des Kompressors,
- Phase P4: Aktivieren des Kompressors.

2. Verfahren nach Anspruch 1, **dadurch gekennzeichnet, dass** im Klimakreislauf eine Speichereinheit vorgesehen ist, welche dem Verdampfer in Luftströmungsrichtung vorgelagert und/oder nachgelagert ist oder eine Baueinheit mit dem Verdampfer bildet, so dass sie ebenfalls von dem Luftstrom umströmt wird, wobei die Speichereinheit von einem Kältemittel durchströmt ist und die Speichereinheit ein Latentmedium aufweist, welches in thermischem Austausch mit dem Kältemittel steht.

3. Verfahren nach einem der vorhergehenden Ansprüche, **dadurch gekennzeichnet, dass** der Kompressor durch ein PWM-Signal (21, 22, 41) ansteuerbar ist, wobei das Absenken und/oder das Erhöhen der Leistungsaufnahme des Kompressors durch eine Veränderung des PWM-Signals (21, 22, 41) erreichbar ist.

4. Verfahren nach einem der vorhergehenden Ansprüche, **dadurch gekennzeichnet, dass** die Ausgangsfahrsituation eine Fahrsituation bei konstanter Geschwindigkeit oder bei zunehmender Geschwindigkeit ist.

5. Verfahren nach einem der vorhergehenden Ansprüche, **dadurch gekennzeichnet, dass** die Phase P1 durch das Einleiten eines Bremsvorganges auslösbar ist.

6. Verfahren nach einem der vorhergehenden Ansprüche, **dadurch gekennzeichnet, dass** der Übergang von Phase P1 in Phase P2 durch das Erreichen einer definierten unteren Grenztemperatur (T_{GRENZ, U}) des Luftstroms gebildet ist.

7. Verfahren nach einem der vorhergehenden Ansprüche, **dadurch gekennzeichnet, dass** der Übergang von Phase P2 in Phase P3 durch eine Beendigung des Bremsvorgangs und einen Übergang in eine Fahrt mit konstanter Geschwindigkeit oder in eine Fahrt mit sich erhöhender Geschwindigkeit ausgelöst wird.

8. Verfahren nach einem der vorhergehenden Ansprüche, **dadurch gekennzeichnet, dass** der Übergang von Phase P3 in Phase P4 durch ein Überschreiten einer vorgegebenen oberen Grenztemperatur (T_{GRENZ, O}, T_{GRENZ, O SPVD}, 25) des Luftstroms ausgelöst wird.

9. Verfahren nach einem der vorhergehenden Ansprüche, **dadurch gekennzeichnet, dass** zwischen zwei aufeinanderfolgenden Anwendungen des Verfahrens eine definierte Mindestzeit (tₘᵢₙ) verstrichen sein muss.

10. Verfahrens nach einem der vorhergehenden Ansprüche, **dadurch gekennzeichnet, dass** eine Speichereinheit verwendet wird, die ein Latentmedium vorsieht, dessen Phasenwechseltemperatur oberhalb einer definierten Temperatur (T₁) liegt oder dadurch, dass die Phasenwechseltemperatur des Latentmediums unterhalb einer definierten Temperatur (T₁) liegt, wobei die Temperatur (T₁) einer Temperatur des Luftstroms nach dem Verdampfer entspricht.

11. Verfahren nach einem der vorhergehenden Ansprüche, **dadurch gekennzeichnet, dass** der Kompressor in Phase P1 und/oder in Phase P2 der Antriebseinheit einen höheren Widerstand entgegensetzt, wobei der höhere Widerstand durch die erhöhte Leistungsaufnahme des Kompressors verursacht ist.

12. verfahren nach einem der vorhergehenden Ansprüche, **dadurch gekennzeichnet, dass** im Klimakreislauf zusätzlich ein Bypass vorgesehen ist, wobei durch den Bypass eine Teilmenge des Luftstroms, welcher um den Verdampfer und/oder die Speichereinheit strömbar ist, an dem Verdampfer und/oder der Speichereinheit vorbeiströmbar ist.

13. Verfahren nach einem der vorhergehenden Ansprüche, **dadurch gekennzeichnet, dass** die Aufteilung des Luftstroms auf einen Strömungsweg, welcher den Verdampfer umströmt, und einen Strömungsweg, welcher am Verdampfer vorbeiströmt, durch einen Verstellmechanismus realisierbar ist, wobei der Verstellmechanismus durch ein Stellsignal steuerbar ist.

## Claims

1. A method for the thermal recuperation of energy in a vehicle, wherein an air-conditioning circuit is provided, having at least the following components:
- a compressor which is connected to a drive unit,
- an evaporator which is flowed through by a refrigerant and around which an airflow flows, **characterised in that**, starting from an initial driving situation, the following phases are performed:
- Phase P1: increasing the power consumption of the compressor to a value (P_{L1}) which is above the initial value (P_{L0}) which is present in the initial driving situation,
- Phase P2: reducing the power consumption of the compressor to a value (P_{L2}) which is below the value (P_{L1}) but above the value (P_{L0}),
- Phase P3: deactivating the compressor,
- Phase P4: activating the compressor.

2. The method according to claim 1, **characterised in that** a memory unit is provided in the air-conditioning circuit, which is upstream and/or downstream of the evaporator in the airflow direction or forms a structural unit with the evaporator, so that the airflow also flows around it, wherein the memory unit is flowed through by a refrigerant and the memory unit has a latent medium which is in thermal exchange with the refrigerant.

3. The method according to one of the preceding claims, **characterised in that** the compressor is controllable by a PWM signal (21, 22, 41), wherein the reducing and/or increasing of the power consumption of the compressor can be achieved by changing the PWM signal (21, 22, 41).

4. The method according to one of the preceding claims, **characterised in that** the initial driving situation is a driving situation at constant speed or at increasing speed.

5. The method according to one of the preceding claims, **characterised in that** the phase P1 can be triggered by initiating a braking operation.

6. The method according to one of the preceding claims, **characterised in that** the transition from phase P1 to phase P2 is realised by reaching a defined lower limit temperature (T_{Grenz, U}) of the airflow.

7. The method according to one of the preceding claims, **characterised in that** the transition from phase P2 to phase P3 is triggered by a completion of the braking operation, and a transition to a drive with a constant speed or to a drive with an increasing speed.

8. The method according to one of the preceding claims, **characterised in that** the transition from phase P3 to phase P4 is triggered by exceeding a predetermined upper limit temperature (T_{Grenz, O}, T_{Grenz, O SPVD}, 25) of the airflow.

9. The method according to one of the preceding claims, **characterised in that** a defined minimum time (tₘᵢₙ) must have elapsed between two successive applications of the method.

10. The method according to one of the preceding claims, **characterised in that** a memory unit providing a latent medium is used, the phase change temperature of which is above a defined temperature (T₁) or **in that** the phase change temperature of the latent medium is below a defined temperature (T₁), wherein the temperature (T₁) corresponds to a temperature of the airflow after the evaporator.

11. The method according to one of the preceding claims, **characterised in that** in phase P1 and/or in phase P2, the compressor counters the drive unit with a higher resistance, wherein the higher resistance is caused by the increased power consumption of the compressor.

12. The method according to one of the preceding claims, **characterised in that**, in addition, a bypass is provided in the air-conditioning circuit, wherein, through the bypass, a partial amount of the airflow which can flow around the evaporator and/or the memory unit can flow past the evaporator and/or the memory unit.

13. The method according to one of the preceding claims, **characterised in that** the division of the airflow into a flow path which flows around the evaporator and a flow path which flows past the evaporator can be realised by an adjusting mechanism, wherein the adjustment mechanism is controllable by a control signal.

## Revendications

1. Procédé de récupération thermique provenant d'une énergie fournie dans un véhicule, où il est prévu un circuit de climatisation qui présente au moins les composants suivantes :
- un compresseur qui est relié à une unité d'entraînement,
- un évaporateur qui est traversé par un fluide frigorigène et est entouré par un flux d'air, **caractérisé en ce que**, à partir d'une situation initiale de conduite, les phases suivantes sont exécutées :
- phase P1 : augmentation de la puissance absorbée du compresseur, passant à une valeur (P_{L1}) qui est au-dessus de la valeur initiale (P_{L0}) qui se présente dans la situation initiale de conduite,
- phase P2 : abaissement de la puissance absorbée du compresseur, passant à une valeur (P_{L2}) qui est inférieure à la valeur (P_{L1}) mais supérieure à la valeur (P_{L0}) ,
- phase P3 : désactivation du compresseur,
- phase P4 : activation du compresseur.

2. Procédé selon la revendication 1, **caractérisé en ce qu'**un ensemble accumulateur est prévu dans le circuit de climatisation, ensemble accumulateur qui, suivant la direction d'écoulement de l'air, est disposé en amont et / ou disposé en aval de l'évaporateur, ou bien forme un ensemble avec l'évaporateur, de sorte que ledit ensemble est entouré également par le flux d'air, où l'ensemble accumulateur est traversé par un fluide frigorigène et l'ensemble accumulateur présente un milieu latent qui est en échange thermique avec le fluide frigorigène.

3. Procédé selon l'une des revendications précédentes, **caractérisé en ce que** le compresseur peut être piloté par un signal (21, 22, 41) à modulation de largeur d'impulsions (PWM), où l'abaissement et / ou l'augmentation de la puissance absorbée du compresseur peut être obtenu(e) par une modification du signal PWM (21, 22, 41).

4. Procédé selon l'une quelconque des revendications précédentes, **caractérisé en ce que** la situation initiale de conduite est une situation de conduite à vitesse constante ou à vitesse croissante.

5. Procédé selon l'une quelconque des revendications précédentes, **caractérisé en ce que** la phase P1 peut être déclenchée par le fait qu'un freinage se produit.

6. Procédé selon l'une quelconque des revendications précédentes, **caractérisé en ce que** le passage de la phase P1 à la phase P2 est formé par le fait d'atteindre une température limite définie (T_{LIMITE, U}), plus basse, du flux d'air.

7. Procédé selon l'une quelconque des revendications précédentes, **caractérisé en ce que** le passage de la phase P2 à la phase P3 est déclenché par un achèvement du freinage et par un passage à une conduite à vitesse constante, ou bien à une conduite où la vitesse augmente.

8. Procédé selon l'une quelconque des revendications précédentes, **caractérisé en ce que** le passage de la phase P3 à la phase P4 est déclenché par un dépassement d'une température limite prédéfinie (T_{LIMITE, 0} T_{LIMITE, 0 SPVD}, 25), plus élevée, du flux d'air.

9. Procédé selon l'une quelconque des revendications précédentes, **caractérisé en ce qu'**un temps minimum défini (tₘᵢₙ) doit s'être écoulé entre deux applications du procédé, qui se suivent.

10. Procédé selon l'une quelconque des revendications précédentes, **caractérisé en ce qu'**un ensemble accumulateur est utilisé, ensemble accumulateur qui prévoit un milieu latent dont la température de changement de phase est supérieure à une température définie (T₁), ou bien **en ce que** la température de changement de phase du milieu latent est inférieure à une température définie (T₁), où la température (T₁) correspond à une température du flux d'air en aval de l'évaporateur.

11. Procédé selon l'une quelconque des revendications précédentes, **caractérisé en ce que** le compresseur, au cours de la phase P1 et / ou au cours de la phase P2 de l'unité d'entraînement, oppose une plus grande résistance, où la plus grande résistance est provoquée par la puissance absorbée augmentée du compresseur.

12. Procédé selon l'une quelconque des revendications précédentes, **caractérisé en ce qu'**il est prévu en outre une dérivation dans le circuit de climatisation où, sous l'effet de la dérivation, une quantité partielle du flux d'air, qui peut s'écouler autour de l'évaporateur et / ou autour de l'ensemble accumulateur, peut s'écouler en passant devant l'évaporateur et / ou devant l'ensemble accumulateur.

13. Procédé selon l'une quelconque des revendications précédentes, **caractérisé en ce que** la répartition du flux d'air sur une trajectoire d'écoulement qui entoure l'évaporateur, et sur une trajectoire d'écoulement qui passe devant l'évaporateur, est réalisable par un mécanisme de réglage, où le mécanisme de réglage peut être commandé par un signal de réglage.
